# EUROPEAN PATENT APPLICATION

(11) **EP 4 721 550 A1**
(43) Date of publication of application: **08.04.2026**
(21) Application number: 23943278.4
(22) Date of filing: 01.11.2023
(51) Int. Cl.: A01D 51/00, A63B 47/02

(54) **NUT COLLECTOR**

(30) Priority: 27.06.2023 CN 202310768979
(71) Applicant: Cixi Huazhijie Plastic Product Co., Ltd, Cixi, Zhejiang 315333 (CN)
(72) Inventor: HUA, Jie, Ningbo, Zhejiang 315333 (CN); HUA, Shimin, Ningbo, Zhejiang 315333 (CN)
(74) Representative: Meyer-Dulheuer MD Legal Patentanwälte PartG mbB
(86) International application number: PCT/CN2023/128983
(87) International publication number: WO 2025/000799

(57) **Abstract**

A nut collector comprises a handle (1), a basket support (2), a collecting basket (3), and a covering (5). The collecting basket (3) comprises two fixed members (31) which are capable of rotating relative to the basket support (2) and a plurality of elastic wires (32) each connecting to the two fixed members (31) to form a basket body, the collecting basket (3) has an opening (4) for exporting nuts; the covering (5) has at least two states: in a first state, the covering (5) covers the opening (4) of the collecting basket (3) so that the collecting basket (3) can picking up nuts; in a second state, the covering (5) moves from the opening so that the opening is uncovered for the nuts collected inside the collecting basket (3) to be exported from the opening (4). The discharging operation of the nut collector of the present invention is easy and safe, the fruit farmers do not need to pull apart the elastic wires with hands.

## Description

### BACKGROUND

### Technical Field

The present invention relates to a field of nut collecting tools, and in particular to a nut collector.

### Description of Related Art

Nuts such as hazelnuts, chestnuts, walnuts and almonds will fall from the trees after ripeness and scatter on the ground, so that the nuts need to be picked up in time for treatment. Generally, the nuts scattered on the ground are gathered in a manual picking manner. However, due to the large area and large number of scattered nuts, manual picking often requires a lot of physical strength of fruit farmers, and the efficiency of collecting nuts is relatively low.

Thus, handheld picking devices such as nut collectors have emerged in the market, so the fruit farmers can pick up nuts without bending over. After searching, a Chinese patent CN206149888U (application No.: CN201621150771.X) disclosed a nut collector comprises: a handle and a collecting basket, a support connected to the handle and a collecting basket connected to a lower end of the support in a rotatable manner, wherein the collecting basket comprises a plurality of spring wires. The spring wires can be deformed under stress, so that the gap between two adjacent spring wires is enlarged to form a feed port with an aperture greater than the diameter of nuts, and the nuts scattered on the ground can be picked up into the collecting basket. Accordingly, it is highly efficient, easy and convenient in the whole picking process.

When the collecting basket is full with nuts, the fruit farmers need to manually pull apart two adjacent spring wires, so that the collecting basket have a plurality of discharge ports each with an aperture greater than the diameter of nuts, therefore the nuts can be smoothly poured out from the discharge ports to prepare for next picking. Since there are protruded tips on the surfaces of some nuts, for example, sharp thorns on the shells of chestnuts, flat openings on both ends of almonds and raised ridges on the surfaces of walnuts, during a discharging operation, nuts are easy to scratch fruit farmers' hands, and there are great safety hazards in the use of the nut collectors. Moreover, in the prior art, the collecting basket connects to the support through a fixed shaft in a rotatable manner, and the collecting basket is only supported by the fixed shaft in a rotatable manner during its rotation, resulting in poor stability of the collecting basket. Therefore, further improvement is needed.

### SUMMARY

It is a first object of the present invention to provide a nut collector, so that fruit farmers do not need to directly pull apart elastic wires of a collecting basket with hands during a discharging operation, accordingly safety hazards in the course of usage are reduced.

It is a second object of the present invention to provide a nut collector, which enables better stability of rotation of a collecting basket.

For achieving the first object, the nut collector comprises a handle; a basket support connected to the handle and having a bottom end; a collecting basket being rotatably connected to the bottom end of the basket support; a covering being moveably connected to the basket support; wherein, the collecting basket comprises two fixed members which are capable of rotating relative to the basket support and a plurality of elastic wires each connecting to the two fixed members to form a basket body, the collecting basket has an opening for exporting nuts at one side of the collecting basket; the covering has at least two states:
in a first state, the covering covers the opening of the collecting basket so that the collecting basket is capable of picking up nuts; and
in a second state, the covering moves relative to the basket support away from the opening so that the opening is uncovered for the nuts collected inside the collecting basket to be exported from the opening.

To enable the covering to switch between the two states, preferably, a driving device is connected to the covering for driving the covering to switch from the first state to the second state and/or driving the covering to switch from the second state to the first state.

Preferably, the covering is rotatably connected to the basket support, the driving device comprises a pulling rope having a first end and a second end, and a transmission assembly, the first end of the pulling rope is connected to the covering through the transmission assembly, the covering is capable of rotating relative to the basket support under the action of the pulling rope and the transmission assembly, so that the covering is switched from the first state to the second state and/or from the second state to the first state.

Preferably, the covering comprises a pair of covering plates, a first covering plate and a second covering plate, which are rotatable relative to each other to be open or closed, when in the first state the first covering plate and the second covering plate are closed and the opening is covered, when in the second state the first covering plate and the second covering plate are open and the opening is uncovered;
the transmission assembly comprises:
a positioning block connected to the second end of the pulling rope; a positioning shaft; a first connecting rod having a first end and a second end; a second connecting rod having a first end and a second end; a third connecting rod having a first end and a second end; a fourth connecting rod having a first end and a second end; a first rotating shaft; a second rotating shaft; a third rotating shaft;
the positioning shaft is connected to the positioning block, the covering is rotatably connected to the basket support through the positioning shaft of the transmission assembly;
the first connecting rod has a first hole for the positioning shaft to pass through on the first end of the first connecting rod, and has a second hole on the second end of the first connecting rod;
the second connecting rod has a third hole for the positioning shaft to pass through on the first end of the second connecting rod, and has a fourth hole on the second end of the second connecting rod, the positioning shaft passes through both the first hole and the third hole;
the third connecting rod has a fifth hole on the first end of the third connecting rod, and has a sixth hole on the second end of the third connecting rod;
the fourth connecting rod has a seventh hole on the first end of the fourth connecting rod, and has an eighth hole on the second end of the fourth connecting rod;
the first rotating shaft passes through the second hole of the first connecting rod and the fifth hole of the third connecting rod;.
the second rotating shaft passes through the fourth hole of the second connecting rod and the seventh hole of the fourth connecting rod;
the third rotating shaft passes through the sixth hole of the third connecting rod and the eighth hole of the fourth connecting rod, one end of the first covering plate and one end of the second covering plate which are connected to each other are rotatably connected to the third rotating shaft, the third rotating shaft is connected to the basket support.

As a design of the first covering plate and the second covering plate, preferably, both the first covering plate and the second covering plate have a semicircular shape, the third connecting rod is integrated with the first covering plate, and the fourth connecting rod is integrated with the second covering plate.

Preferably, the transmission assembly further comprises a first fixed pulley and a second fixed pulley which are fixed on the basket support, and a pulling member which is sleeved on the handle and is slidable along the handle, the first end of the pulling rope successively passes through the first fixed pulley and the second fixed pulley to connect to the positioning block, and the second end of the pulling rope is connected to the pulling member; when the pulling member slides upward along the handle, the pulling member slides the pulling rope upward, and drives the first covering plate and the second covering plate to rotate open under the action of the transmission assembly, so that the opening is uncovered since the first covering plate and the second covering plate are moved away from the opening; correspondingly, when the pulling member and the pulling rope are released, the first covering plate and the second covering plate are rotated to cover the opening.

To enable the covering to switch from the second state to the first state, the transmission assembly further comprises a torsion spring which acts on the first connecting rod and the second connecting rod. The torsion spring can reset the first connecting rod and the second connecting rod, so as to drive the third connecting rod and the fourth connecting rod to reset, so that the first covering plate and the second covering plate rotate relative to each other to be closed to cover the opening.

Preferably, the basket support has a guide slot extending in a vertical direction on a protruding arch of the basket support, the positioning shaft is positioned in the guide slot and can slide within the guide slot.

To limit the downward slide range of the pulling member, the basket support has a top end, the basket support has a lug on the top end of the basket support, the lug has a second through hole formed axially along the handle on a surface of the lug, the pulling rope comprises an upper pulling rope having a first end and a second end and a lower pulling rope having a first end and a second end, the first end of the upper pulling rope is connected to the pulling member and the second end thereof is connected to the first end of the lower pulling rope, the second end of the lower pulling rope is connected to the positioning block, the lower pulling rope passes through the second through hole and slides within the second through hole; correspondingly, the lug has an upper end, a second limiting member is arranged on the upper end of the lug, the second limiting member is sleeved on the lower pulling rope to limit a downward slide range of the lower pulling rope.

For achieving the second object, the nut collector using the above-stated structure, wherein, the basket support comprises a first fork arm and a second fork arm, the basket support has an annular connecting member which is used to rotatably connect to the corresponding fixed member of the collecting basket on the first fork arm, and correspondingly, the fixed member has an annular shape matched with the annular connecting member, the fixed member and the annular connecting member are connected to form the opening which can be covered by the covering, the basket support has an annular base on the second fork arm, the annular base is rotatably connected to the corresponding fixed member of the collecting basket.

Compared with the prior art, the nut collector of the present invention has the following advantages.
(1) The movable covering is arranged at the opening at one side of the collecting basket, the opening can be covered to be closed by the covering, so that the collecting basket can pick up nuts. The covering can also be moved relative to the basket support away from the opening, so that the opening is uncovered, the nuts gathered in the collecting basket can be exported from the opening. Thus, the discharging operation is easy and safe, the fruit farmers do not need to pull apart the elastic wires with hands, and the safety hazard in the use of the nut collector is reduced.
(2) A contact surface of the collecting basket in relative rotation with the basket support is ring-shaped, so that the rotation of the collecting basket is more stable when the collecting basket rolls to gather nuts, and the service life of the nut collector is increased.

### BRIEF DESCRIPTION OF THE DRAWINGS

Fig. 1 is a front view of a nut collector according to Embodiment 1 of the present invention;
Fig. 2 is a perspective view of a basket support and a collecting basket according to Embodiment 1 of the present invention;;
Fig. 3 is a perspective view of the collecting basket according to Embodiment 1 of the present invention;
Fig. 4 is a perspective view of the basket support and a covering according to Embodiment 1 of the present invention (when a housing of a transmission assembly is omitted);
Fig. 5 is a perspective view of a transmission assembly and the covering according to Embodiment 1 of the present invention;
Fig. 6 is a perspective view of a handle, a pulling member and a first limiting member according to Embodiment 1 of the present invention;
Fig. 7 is a perspective view of the first limiting member according to Embodiment 1 of the present invention;
Fig. 8 is a perspective view of a nut collector according to Embodiment 2 of the present invention;

### DESCRIPTION OF THE EMBODIMENTS

The present invention will be further described below clearly and completely by embodiments with reference to the accompanying drawings. Obviously, the below-described embodiments are only two preferred embodiments of the present invention not all. Except for these two embodiments of the present invention, other embodiments obtained by general technical personnels in this field without any creative achievement made to these two preferred embodiments belongs to the protection scope of the present invention.

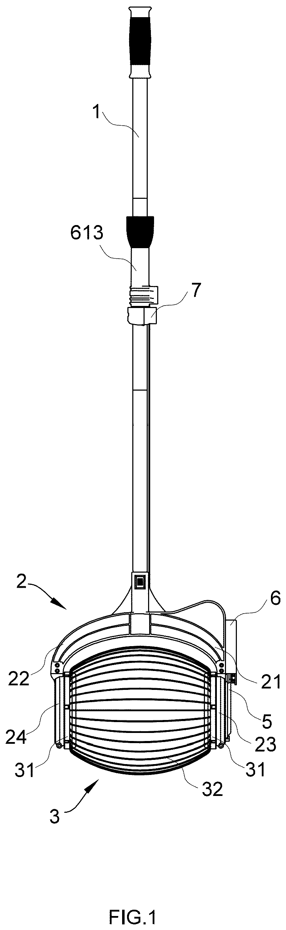

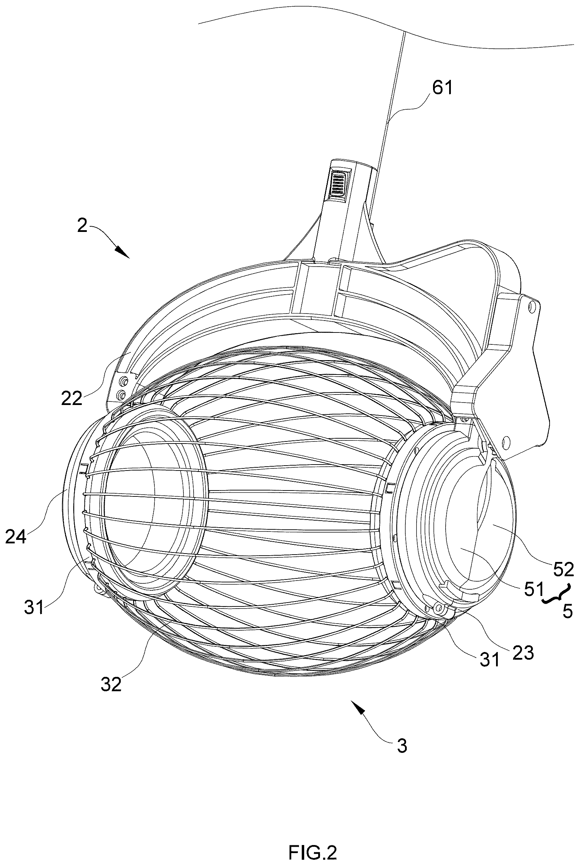

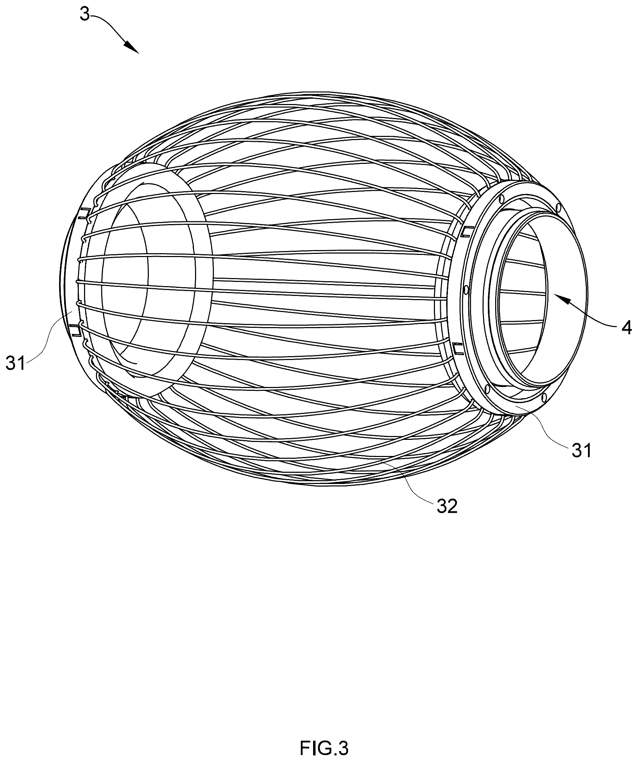

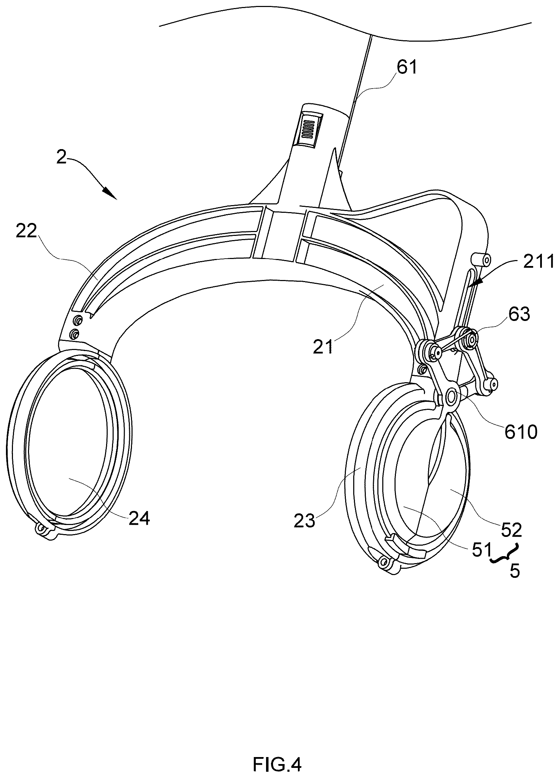

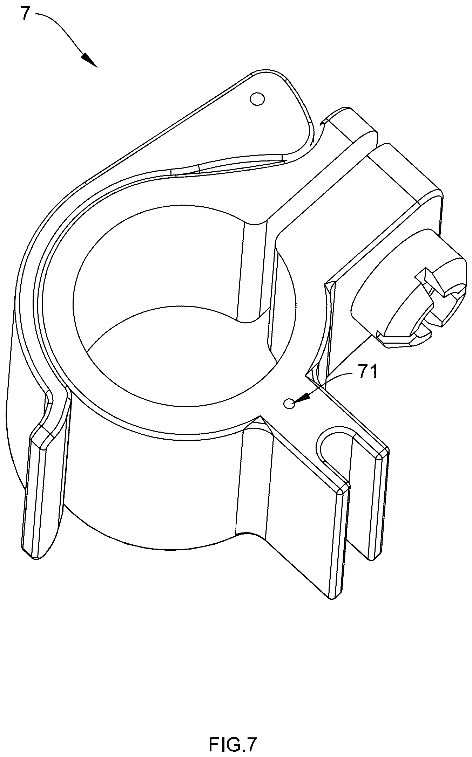

Figs. 1-7 show a first preferred embodiment of a nut collector of the present invention.

As shown in Fig. 1, the nut collector comprises a handle 1 having a bottom end, a basket support 2 having a bottom end, a collecting basket 3, an opening 4, a covering 5, a driving device 6 and a first limiting member 7. The bottom end of the handle 1 is detachably connected to the basket support 2. The collecting basket 3 is rotatably connected to the bottom end of the basket support 2, and the collecting basket 3 has the opening 4 located at one side of the collecting basket 3 facing sideward for exporting nuts at one side of the collecting basket 3. The covering 5 being capable of covering the opening 4 is rotatably connected to the basket support 2 and is connected to the driving device 6. The driving device 6 comprises a pulling rope 61 having a first end and a second end, and a transmission assembly, the first end of the pulling rope 61 is connected to the covering 5 through the transmission assembly, the covering 5 is capable of rotating relative to the basket support 2 under the action of the pulling rope 61 and the transmission assembly.

As shown in Figs. 1-4, the collecting basket 3 comprises two fixed members 31 which are capable of rotating relative to the basket support 2 and a plurality of elastic wires 32 each connecting to the two fixed members 31 to form a basket body. The basket support 2 comprises a first fork arm 21 and a second fork arm 22, the basket support 2 has an annular connecting member 23 which is used to rotatably connect to the corresponding fixed member 31 of the collecting basket 3 on the first fork arm 21, and correspondingly, the fixed member 31 has an annular shape matched with the annular connecting member 23, the fixed member 31 and the annular connecting member 23 are connected to form the opening 4 which can be covered by the covering 5, the basket support 2 has an annular base 24 on the second fork arm 22, the annular base 24 is rotatably connected to the corresponding fixed member 31 of the collecting basket 3, the annular base 24 has an enclosed flat plate at a bottom surface of the annular base 24. The covering 5 comprises a pair of covering plates, a first covering plate 51 and a second covering plate 52, which are rotatable relative to each other to be open or closed, both the first covering plate 51 and the second covering plate 52 have a semicircular shape, when in a first state the first covering plate 51 and the second covering plate 52 are closed and the opening 4 is covered, when in a second state the first covering plate 51 and the second covering plate 52 are open and the opening 4 is uncovered. In addition, the basket support 2 has a guide slot 211 extending in a vertical direction on a protruding arch of the basket support 2, the positioning shaft 63 is positioned in the guide slot 211 and can slide within the guide slot 211.

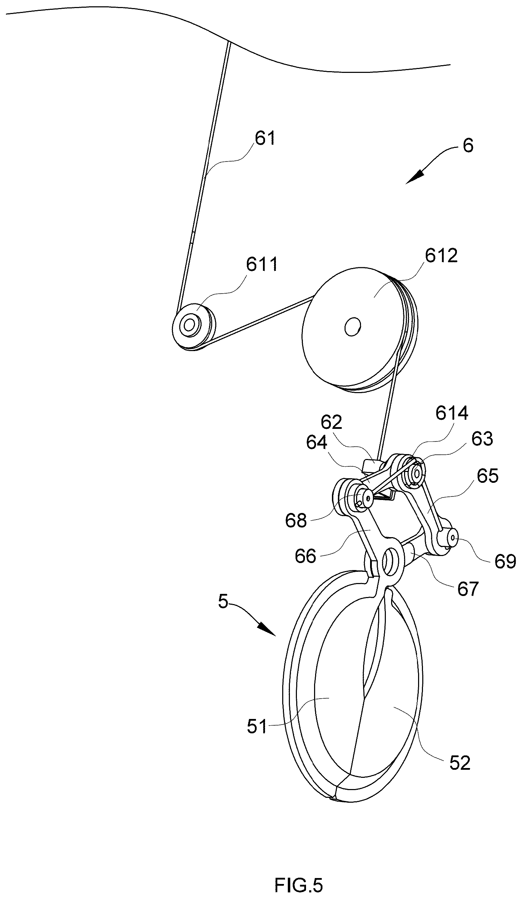

As shown in Fig. 5, the transmission assembly comprises:
a positioning block 62 connected to the second end of the pulling rope 61; a positioning shaft 63; a first connecting rod 64 having a first end and a second end; a second connecting rod 65 having a first end and a second end; a third connecting rod 66 having a first end and a second end; a fourth connecting rod 67 having a first end and a second end; a first rotating shaft 68; a second rotating shaft 69; a third rotating shaft 610;
the positioning shaft 63 is connected to the positioning block 62, the covering 5 is rotatably connected to the basket support 2 through the positioning shaft 63 of the transmission assembly;
the first connecting rod 64 has a first hole for the positioning shaft 63 to pass through on the first end of the first connecting rod 64, and has a second hole on the second end of the first connecting rod 64;
the second connecting rod 65 has a third hole for the positioning shaft 63 to pass through on the first end of the second connecting rod 65, and has a fourth hole on the second end of the second connecting rod 65, the positioning shaft 63 passes through both the first hole and the third hole;
the third connecting rod 66 has a fifth hole on the first end of the third connecting rod 66, and has a sixth hole on the second end of the third connecting rod 66;
the fourth connecting rod 67 has a seventh hole on the first end of the fourth connecting rod 67, and has an eighth hole on the second end of the fourth connecting rod 67;
the first rotating shaft 68 passes through the second hole of the first connecting rod 64 and the fifth hole of the third connecting rod 66;
the second rotating shaft 69 passes through the fourth hole of the second connecting rod 65 and the seventh hole of the fourth connecting rod 67;
the third rotating shaft 610 passes through the sixth hole of the third connecting rod 66 and the eighth hole of the fourth connecting rod 67, one end of the first covering plate 51 and one end of the second covering plate 52 which are connected to each other are rotatably connected to the third rotating shaft 610, the third rotating shaft 610 is connected to the basket support 2.

The transmission assembly further comprises a first fixed pulley 611 and a second fixed pulley 612 which are fixed on the basket support 2 the first end of the pulling rope 61 successively passes through the first fixed pulley 611 and the second fixed pulley 612 to connect to the positioning block 62.

The transmission assembly further comprises a torsion spring 614 comprising a spring coil and two twisted arms. The spring coil of the torsion spring 614 is sleeved on the position shaft 63 and two twisted arms of the torsion spring 614 acts on the first connecting rod 64 and the second connecting rod 65, respectively. Two ends of the torsion spring 614 are respectively connected to the first rotating shaft 68 and the second rotating shaft 68.

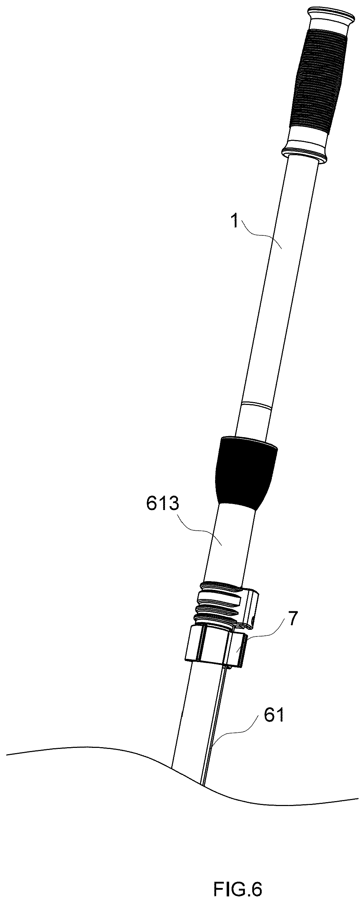

As shown in Figs. 6-7, the transmission assembly further comprises a pulling member 613 which is slidable along the handle 1, the second end of the pulling rope 61 is connected to the pulling member 613, when the pulling member 613 slides upward along the handle 1, the pulling member 613 slides the pulling rope 61 upward, and drives the first covering plate 51 and the second covering plate 52 to rotate relative to each other along a vertical direction to the facing direction of the opening 4 to open under the action of the transmission assembly, at this time the nut collector is in the second state, the opening 4 is uncovered since the first covering plate 51 and the second covering plate 52 are moved away from the opening 4; correspondingly, when the pulling member 613 and the pulling rope 61 are released, the first covering plate 51 and the second covering plate 52 rotate to cover the opening 4 returning to the initial first state. The pulling member 613 is a tube which is sleeved on the handle 1, the pulling member 613 has a handheld portion in a flared shape and a plurality of antiskid ribs arranged on an outer wall of the handheld portion. Correspondingly, the handle 1 has a first limiting member 7 sleeved on the handle 1 being used to limit a downward slide range of the pulling member 613, the first limiting member 7 has a first through hole 71 formed axially along the handle 1 on a surface of the first limiting member 7, and the pulling rope 61 passes through the first through hole 71 and can slide within the first through hole 71.

The operation principle in this embodiment will be described below.

When not in use, the pulling member 613 is positioned on the handle 1 through the first limiting member 7, the first covering plate 51 and the second covering plate 52 are closed to cover the opening 4, and a gap formed between two adjacent elastic wires 32 of the collecting basket 3 is not big enough for nuts to enter into or be fallen out from the collecting basket 3..

In the process of picking up nuts, a fruit farmer holds the handle 1 to press the collecting basket 3 down so as to deform the elastic wires 32, so that the gap between two adjacent elastic wires 32 is increased, enabling nuts scattered on the ground to enter the collecting basket 3 through the gap.

After the collecting basket 3 is full with nuts, the pulling member 613 is pulled upward with hands, and the pulling member 613 slides the pulling rope 61 upward. The pulling rope 61 drives the positioning shaft 63 on the positioning block 62 to move up within the guide slot 211 through the first fixed pulley 611 and the second fixed pulley 612. The upward slide range of the positioning shaft 63 enables the first connecting rod 64 and the second connecting rod 65 to rotate relative to the positioning shaft 63 so as to drive the third connecting rod 66 and the fourth connecting rod 67 to rotate correspondingly, so that the first covering plate 51 and the second covering plate 52 are opened and the opening 4 is uncovered, the nuts gathered in the collecting basket 3 are exported from the opening 4..

After the nuts in the collecting basket 3 are poured out completely, the fruit farmer releases the handle 1, the first connecting rod 64 and the second connecting rod 65 are reset by the torsion spring 614, driving the third connecting rod 66 and the fourth connecting rod 67 to rotate to close the first covering plate 51 and the second covering plate 52, and also drives the positioning shaft 63 to move down within the guide slot 211 so that the closed first covering plate 51 and second covering plate 52 covers the opening 4. Moreover, the positioning shaft 63 slides the pulling rope 61 down through the positioning block 62, and the pulling rope 61 enables the pulling member 613 to reset through the first fixed pulley 611 and the second fixed pulley 612.

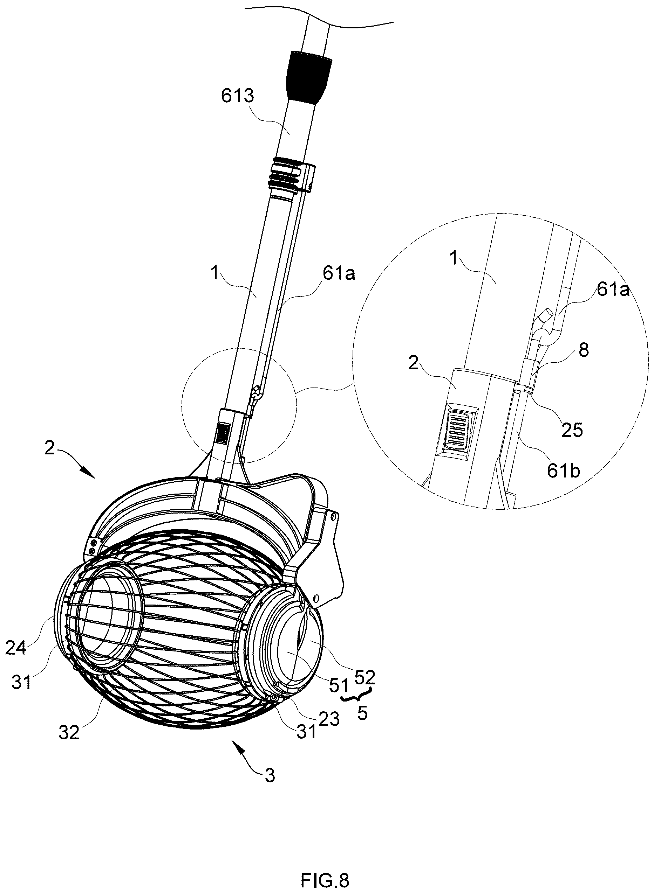

Fig. 8 shows a second preferred embodiment of a nut collector of the present invention. A handle 1, a basket support 2, a collecting basket 3, an opening 4, a covering 5 and a driving device 6 of the nut collector in this embodiment are the same as the structures in Embodiment 1, wherein the pulling rope 61 in the driving device 6 comprises an upper pulling rope 61a having a first end and a second end and a lower pulling rope 61b having a first end and a second end, the first end of the upper pulling rope 61a is connected to the pulling member 613 and the second end thereof is connected to the first end of the lower pulling rope 61b, the second end of the lower pulling rope 61b is connected to the positioning block 62, the basket support 2 has a top end, the basket support 2 has a lug 25 on the top end of the basket support 2, the lug 25 has a second through hole formed axially along the handle 1 on a surface of the lug 25, the lower pulling rope 61b passes through the second through hole and slides within the second through hole; the lug has an upper end, a second limiting member 8 is arranged on the upper end of the lug 25, the second limiting member 8 is sleeved on the lower pulling rope 61b to limit a downward slide range of the lower pulling rope 61b.

The driving device 6 drives the covering 5 to rotate to cover the opening 4, which is only a preferred embodiment of the present invention, and is not intended to limit the protection scope of the present invention. It is also possible to manually cover the covering 5 on the opening 4 so as to close the opening 4, so that the collecting basket 3 can pick up nuts. Correspondingly, the covering 5 can be manually moved relative to the basket support 2 away from the opening 4 so that the opening 4 is uncovered for the nuts gathered in the collecting basket 3 to be exported from the opening 4.

## Claims

1. A nut collector, comprising:
a handle (1);
a basket support (2) connected to the handle (1) and having a bottom end;
a collecting basket (3) being rotatably connected to the bottom end of the basket support (2);
a covering (5) being moveably connected to the basket support (2);
**characterized in that**,
the collecting basket (3) comprises two fixed members (31) which are capable of rotating relative to the basket support (2) and a plurality of elastic wires (32) each connecting to the two fixed members (31) to form a basket body, the collecting basket (3) has an opening (4) for exporting nuts at one side of the collecting basket (3);
the covering (5) has at least two states:
in a first state, the covering (5) covers the opening (4) of the collecting basket (3) so that the collecting basket (3) is capable of picking up nuts; and
in a second state, the covering (5) moves relative to the basket support (2) away from the opening (4) so that the opening (4) is uncovered for the nuts collected inside the collecting basket (3) to be exported from the opening (4).

2. The nut collector according to claim 1, **characterized in that**, a driving device (6) is connected to the covering (5) for driving the covering (5) to switch from the first state to the second state and/or driving the covering (5) to switch from the second state to the first state.

3. The nut collector according to claim 2, **characterized in that**, the covering (5) is rotatbly connected to the basket support (2), the driving device (6) comprises a pulling rope (61) having a first end and a second end, and a transmission assembly, the first end of the pulling rope (61) is connected to the covering (5) through the transmission assembly, the covering (5) is capable of rotating relative to the basket support (2) under the action of the pulling rope (61) and the transmission assembly, so that the covering (5) is switched from the first state to the second state and/or from the second state to the first state.

4. The nut collector according to claim 3, **characterized in that**, the covering (5) comprises a pair of covering plates, a first covering plate (51) and a second covering plate (52), which are rotatable relative to each other to be open or closed, when in the first state the first covering plate (51) and the second covering plate (52) are closed and the opening (4) is covered, when in the second state the first covering plate (51) and the second covering plate (52) are open and the opening (4) is uncovered;
the transmission assembly comprises:
a positioning block (62) connected to the second end of the pulling rope (61);
a positioning shaft (63);
a first connecting rod (64) having a first end and a second end;
a second connecting rod (65) having a first end and a second end;
a third connecting rod (66) having a first end and a second end;
a fourth connecting rod (67) having a first end and a second end;
a first rotating shaft (68);
a second rotating shaft (69);
a third rotating shaft (610);
the positioning shaft (63) is connected to the positioning block (62), the covering (5) is rotatably connected to the basket support (2) through the positioning shaft (63) of the transmission assembly;
the first connecting rod (64) has a first hole for the positioning shaft (63) to pass through on the first end of the first connecting rod (64), and has a second hole on the second end of the first connecting rod (64);
the second connecting rod (65) has a third hole for the positioning shaft (63) to pass through on the first end of the second connecting rod (65), and has a fourth hole on the second end of the second connecting rod (65), the positioning shaft (63) passes through both the first hole and the third hole;
the third connecting rod (66) has a fifth hole on the first end of the third connecting rod (66), and has a sixth hole on the second end of the third connecting rod (66);
the fourth connecting rod (67) has a seventh hole on the first end of the fourth connecting rod (67), and has an eighth hole on the second end of the fourth connecting rod (67);
the first rotating shaft (68) passes through the second hole of the first connecting rod (64) and the fifth hole of the third connecting rod (66);
the second rotating shaft (69) passes through the fourth hole of the second connecting rod (65) and the seventh hole of the fourth connecting rod (67);
the third rotating shaft (610) passes through the sixth hole of the third connecting rod (66) and the eighth hole of the fourth connecting rod (67), one end of the first covering plate (51) and one end of the second covering plate (52) which are connected to each other are rotatably connected to the third rotating shaft (610), the third rotating shaft (610) is connected to the basket support (2).

5. The nut collector according to claim 4, **characterized in that**, both the first covering plate (51) and the second covering plate (52) have a semicircular shape, the third connecting rod (66) is integrated with the first covering plate (51), and the fourth connecting rod (67) is integrated with the second covering plate (52).

6. The nut collector according to claim 5, **characterized in that**, the transmission assembly further comprises a first fixed pulley (611) and a second fixed pulley (612) which are fixed on the basket support (2), and a pulling member (613) which is sleeved on the handle (1) and is slidable along the handle (1), the first end of the pulling rope (61) successively passes through the first fixed pulley (611) and the second fixed pulley (612) to connect to the positioning block (62), and the second end of the pulling rope (61) is connected to the pulling member (613);
when the pulling member (613) slides upward along the handle (1), the pulling member (613) slides the pulling rope (61) upward, and drives the first covering plate (51) and the second covering plate (52) to rotate open under the action of the transmission assembly, so that the opening (4) is uncovered since the first covering plate (51) and the second covering plate (52) are moved away from the opening (4);
correspondingly, when the pulling member (613) and the pulling rope (61) are released, the first covering plate (51) and the second covering plate (52) are rotated to cover the opening (4).

7. The nut collector according to claim 6, **characterized in that**, the transmission assembly further comprises a torsion spring (614) which acts on the first connecting rod (64) and the second connecting rod (65).

8. The nut collector according to claim 7, **characterized in that**, the basket support (2) has a guide slot (211) extending in a vertical direction on a protruding arch of the basket support (2), the positioning shaft (63) is positioned in the guide slot (211) and can slide within the guide slot (211).

9. The nut collector according to claim 8, **characterized in that**, the basket support (2) has a top end, the basket support (2) has a lug (25) on the top end of the basket support (2), the lug (25) has a second through hole formed axially along the handle (1) on a surface of the lug (25), the pulling rope (61) comprises an upper pulling rope (61a) having a first end and a second end and a lower pulling rope (61b) having a first end and a second end, the first end of the upper pulling rope (61a) is connected to the pulling member (613) and the second end thereof is connected to the first end of the lower pulling rope (61b), the second end of the lower pulling rope (61b) is connected to the positioning block (62), the lower pulling rope (61b) passes through the second through hole and slides within the second through hole;
correspondingly, the lug has an upper end, a second limiting member (8) is arranged on the upper end of the lug (25), the second limiting member (8) is sleeved on the lower pulling rope (61b) to limit a downward slide range of the lower pulling rope (61b).

10. The nut collector according to any one of claims 1-9, **characterized in that**, the basket support (2) comprises a first fork arm (21) and a second fork arm (22), the basket support (2) has an annular connecting member (23) which is used to rotatably connect to the corresponding fixed member (31) of the collecting basket (3) on the first fork arm (21), and correspondingly, the fixed member (31) has an annular shape matched with the annular connecting member (23), the fixed member (31) and the annular connecting member (23) are connected to form the opening (4) which can be covered by the covering (5), the basket support (2) has an annular base (24) on the second fork arm (22), the annular base (24) is rotatably connected to the corresponding fixed member (31) of the collecting basket (3).
